# EUROPEAN PATENT APPLICATION

(11) **EP 2 869 306 A1**
(43) Date of publication of application: **06.05.2015**
(21) Application number: 13190901.2
(22) Date of filing: 30.10.2013
(51) Int. Cl.: G21C 3/16, G21C 3/326, G21C 3/328, G21C 3/58, G21C 7/00

(54) **A fuel assembly for a nuclear reactor**

(71) Applicant: Thor Energy AS, 0255 Oslo (NO)
(72) Inventor: Insulander Björk, Klara, 416 79 Göteborg (SE); Helmersson, Sture, 730 40 Kolbäck (SE)
(74) Representative: Israelsson, Stefan

(57) **Abstract**

A fuel assembly (1) for a nuclear reactor comprises a bundle of fuel rods (3) with a first group of fuel rods (5a) and a second group of fuel rods (5b). Each fuel rod comprises a cladding tube (15) and stack of fuel pellets (12) enclosed within the cladding tube. At least a main portion (13) of the fuel stack comprises a fissile nuclear material comprising Plutonium and Thorium, and is arranged with an axial hole (22). Said main portion (13) of the fuel stack of each fuel rod (5a) of the first group comprises a first axial hole (22a) constituting a first volume and said main portion of the fuel stack of each fuel rod (5b) of the second group comprises a second axial hole (22b) constituting a second volume. The first volume and the second volume are different.

## Description

### FIELD OF THE INVENTION

The present invention relates to a fuel assembly for a nuclear reactor and use of a fuel assembly. The fuel assembly comprises a bundle of fuel rods arranged so that the fuel rods are spaced apart and extend parallel with each other. The bundle comprises a first group of fuel rods and a second group of fuel rods. Each fuel rod comprises a cladding tube and a fuel stack comprising fuel pellets enclosed within the cladding tube. At least a main portion of the fuel stack comprises a fissile nuclear material comprising Plutonium and Thorium. Said main portion of the fuel stack of the fuel rods comprises an axial hole extending along a longitudinal axis of the fuel rod.

### PRIOR ART

Thorium-232 can be used in thermal neutron nuclear reactors for generating energy. Thorium-232 is not in itself fissile and can therefore not as such be used in a thermal neutron reactor. However, Thorium-232 can be used in a thermal neutron reactor by means of arranging Thorium-232 together with a fissile material, such as Uranium-233, Uranium-235 or Plutonium-239, providing neutrons that when being absorbed by Thorium-232 will transmute Thorium-232 to Uranium-233, which is a fissile fuel material. In particular, Thorium-232 provides an opportunity to utilize Plutonium for energy production in which case the nuclear fuel comprises a mixture of thorium and plutonium oxides referred to as "Th-MOX".

A major difference, from a neutronic point of view, between Th-MOX and conventional Uranium Oxide (UOX) fuel is that the optimum ratio of the number of hydrogen atoms to the number of heavy metal atoms (the "moderation ratio") for Th-MOX fuel is significantly higher than for conventional UOX fuel.

Th-MOX can be introduced in a conventional fuel assembly design, but the fuel will not be optimally utilized due to the difference in optimum moderation ratio between Th-MOX and conventional UOX fuel. Instead, a fuel assembly using Th-MOX should be modified in comparison to a conventional fuel assembly design by increasing the moderation ratio. This can be achieved with larger fuel rod spacing, fewer fuel rods, smaller fuel rod diameter or with the addition of water channels, etcetera.

A problem with such a modified fuel assembly design is that the operational thermal hydraulic conditions of the adapted fuel assembly are different from the operational conditions of a conventional light water reactor fuel assembly. The modified design therefore requires extensive and costly thermal hydraulic experiments and modifications of the design in order to assure safe use of the fuel assembly and avoidance of undesirable events, such as cross flow between adjacent fuel assemblies. Even if extensive thermal hydraulic experiments are performed, reactor owners and authorities may be reluctant to introduce the modified fuel design in conventional reactors in view of these different operational conditions, in particular if used together with conventional UOX fuel assemblies.

The moderation is not constant within the fuel assembly. In particular, the space between the fuel assemblies in the reactor gives the peripheral fuel rods in a conventional design a higher moderation ratio than the central ones. This unevenness in moderation is usually compensated for by grading the fissile content of the fuel rods, giving peripheral fuel rods a lower fissile content. This complicates fuel fabrication, in particular when mixed oxide fuels are concerned.

US 2010/0254847 A1 discloses an annular nuclear fuel pellet and a method for manufacturing an annular nuclear fuel pellet. The fuel pellets may be made of mixed oxides of Plutonium and Thorium.

JP 11258374 A discloses an annular fuel pellet comprising Plutonium and Thorium.

US 4687629 discloses a fuel element with fuel rods comprising annular fuel pellets of UOX. Each of the annular fuel pellets of some of the fuel rods has an annulus of a first size. On the other hand, each of the annular fuel pellets of other of the fuel rods has an annulus of a second size, in order to enable use of a single U-235 enrichment.

### OBJECTIVE AND SUMMARY OF THE INVENTION

The objective of the present invention is to improve the utilization of fissile Plutonium in Th-MOX fuel for use in a fuel assembly of the same design as a fuel assembly for conventional UOX fuel, while simultaneously controlling power and temperature profiles within the fuel assembly. The utilization should be improved in the sense that more energy can be produced per loaded kilogram of Plutonium.

This objective is obtained by a fuel assembly for a nuclear reactor according to claim 1. The fuel assembly is characterized in that said main portion of the fuel stack of each fuel rod of said first group of fuel rods comprises a first axial hole in the fuel pellets constituting a first volume and said main portion of the fuel stack of each fuel rod of said second group fuel rods comprises a second axial hole in the fuel pellets constituting a second volume, wherein the first volume and the second volume are different.

By the axial hole is thus meant the total volume of the holes in the fuel pellets located in the main portion in the respective fuel rod.

It is within the scope of the present invention that the first or second volume is equal to zero. However, according to an embodiment, both the first and the second volumes are larger than zero.

The introduction of holes improves the utilization of fissile Plutonium when used as the fissile component of Th-MOX when used in conventional UOX fuel assembly designs and eliminates the necessity to develop a modified nuclear fuel assembly design and performing related thermal hydraulic experiments. Furthermore, by arranging the first axial hole in the first group of fuel rods with a different volume than the second axial hole in the second group of fuel rods, the moderation ratio (and thereby the power profile), or alternatively the fuel temperature profile, can be balanced within the fuel assembly.

According to one embodiment of the invention, the fuel rods of the second group are, on the average, located peripheral to the fuel rods of the first group. Accordingly, the first group of fuel rods relates to more central fuel rods and the second group of fuel rods relates to more peripheral fuel rods.

According to one embodiment of the invention, the first volume is larger than the second volume.

By providing the fuel stack of the first group of fuel rods with a larger volume of the first axial hole than the volume of the second axial hole of the fuel stack of the fuel pellets of the second group of fuel rods, the moderation ratio of the first group of fuel rods becomes more similar to the moderation ratio of the second group of fuel rods. Thereby, the power profile at the beginning of life of the fuel assembly becomes more even, reducing the need for fissile content grading. In addition, the utilization of fissile Plutonium is improved without any modification of the fuel assembly design.

According to one embodiment of the invention, the first volume is in the range of 1 - 90 % of the volume of a corresponding fuel stack with pellets without the axial hole.

According to one embodiment of the invention, the second volume is in the range of 0 - 50% of the volume of a corresponding fuel stack with pellets without the axial hole.

According to one embodiment of the invention, the first volume is smaller than the second volume.

Also according to this embodiment it is preferred that the fuel rods of the first group are, on the average, more centrally located in the fuel assembly and that the fuel rods of the second group are, on the average, more peripherally located in the fuel assembly.

By providing the fuel stack of the second group of fuel rods with a larger volume of the axial hole than the volume of the axial hole in the fuel stack of the first group of fuel rods, the fuel temperature of the first group of fuel rods and the second group of fuel rods becomes similar, reducing the need for fissile content grading. In addition, the utilization of fissile Plutonium is improved without any modification of the fuel assembly design.

According to one embodiment of the invention, the first volume is in the range of 0 - 50 % of the volume of a corresponding fuel stack with pellets without the axial hole.

According to one embodiment of the invention, the second volume is in the range of 1 - 90 % of the volume of a corresponding fuel stack with pellets without the axial hole.

According to one embodiment of the invention, the fissile nuclear material comprises a mix of oxides from Uranium and Plutonium.

According to one embodiment of the invention, said main portion of the fuel stack comprises additives of at least one of Americium, Curium, Neptunium and Protactinium.

According to one embodiment of the invention, the Thorium is mainly constituted of Thorium-232.

According to one embodiment of the invention, the Plutonium is mainly constituted of Plutonium-239.

According to one embodiment of the invention, said main portion of the fuel stack mainly comprises Thorium.

According to one embodiment of the invention, said main portion of the fuel stack comprises Plutonium in the range of 0 - 40 % and Thorium in the range of 60 - 100 %, and balance with possible additives or impurities.

According to one embodiment of the invention, the fuel rods are arranged such that the design of the fuel assembly is the same as the design of a fuel assembly designed for use in a conventional light water reactor with conventional uranium oxide fuel. Thereby, the fuel comprising Plutonium and Thorium does not require special fuel assembly designs but can be used in fuel assembly designs of conventional light water reactors.

According to one embodiment of the invention, the fuel assembly comprises a third group of a plurality of fuel rods, wherein said main portion of the fuel stack of each fuel rod of said third group of fuel rods comprises a third axial hole in the fuel pellets constituting a third volume that is intermediate to the first volume and the second volume. The third group of fuel rods provides a transition in the volume of the axial hole in the fuel stack. Preferably, the fuel rods of the third group are, on the average, located between the fuel rods of the first and second groups.

The fuel assembly can also comprise more than three groups of fuel rods with different sized holes.

According to one embodiment of the invention, said main portion of the fuel stack of at least some of the fuel rods comprises two or more fuel stack sections with fuel pellets comprising different axial hole sizes. By providing the main portion of the fuel stack with different sections with different hole sizes, the moderation ratio or fuel temperature of the fuel rods can be adjusted along their length.

According to one embodiment of the invention, said main portion of the fuel pellets of the first group of fuel rods has fuel pellets with the same hole sizes and said main portion of the fuel pellets of the second group of fuel rods has fuel pellets with the same hole sizes, but different from the hole size in the pellets of the fuel rods of the first group. By using the same sized holes for the fuel pellets of the first group of fuel rods and the same sized holes for the fuel pellets of the second group of fuel rods, the manufacturing of the fuel assembly is facilitated.

According to one embodiment of the invention, the holes through the fuel pellets are essentially circular holes extending along the longitudinal axis of the fuel pellets.

According to one embodiment of the invention, the axial holes are filled with pressurized helium gas. The helium gas improves the thermal conductivity within the fuel rod.

The above objective is further obtained by the use of a fuel assembly according to any of the preceding embodiments in a nuclear light water reactor during the operation of the nuclear reactor.

### BRIEF DESCRIPTION OF THE DRAWINGS

The invention will now be explained more closely by the description of different embodiments of the invention and with reference to the appended figures.
- Fig. 1: shows a fuel assembly for a nuclear reactor according to the invention.
- Fig. 2: shows a fuel rod for a fuel assembly comprising a stack of fuel pellets.
- Fig. 3: shows a fuel pellet of the fuel rod in fig. 2.
- Fig. 4: shows a fuel rod lattice arrangement of a fuel assembly according to a first embodiment of the invention.
- Fig. 5: shows a fuel rod lattice arrangement of a fuel assembly according to a second embodiment of the invention.

### DETAILED DESCRIPTION OF PREFERRED EMBODIMENTS OF THE INVENTION

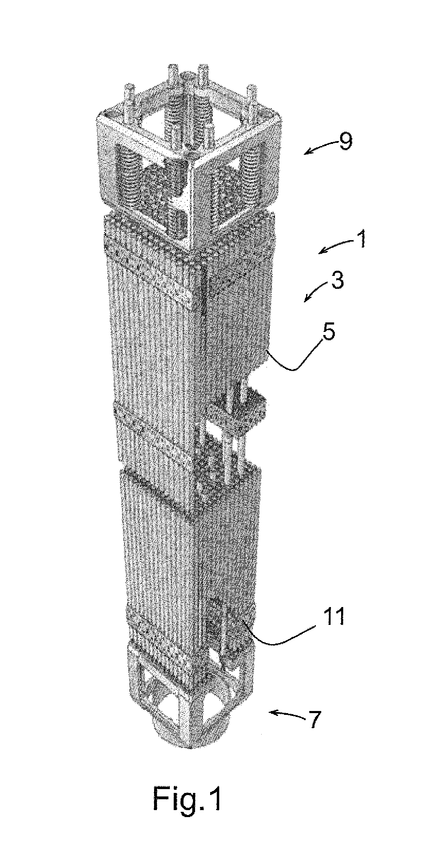

Figure 1 shows a fuel assembly 1 for a nuclear reactor according to the invention. The fuel assembly 1 comprises a bundle 3 of fuel rods 5, wherein the fuel rods 5 are arranged so that the fuel rods 5 are spaced apart and extend essentially parallel with each other. In the disclosed example, the fuel assembly 1 is a pressure water reactor assembly. However, it should be understood that the invention is also applicable to a fuel assembly 1 for a boiling water reactor, or other types of fuel assemblies used in light water reactors.

The fuel assembly comprises a bottom nozzle 7 and a top nozzle 9. The fuel rods 5 are arranged between the bottom nozzle 7 and the top nozzle 9. The fuel assembly comprises a plurality of spacer elements 11 arranged distributed along the length of the fuel rods 5 between the bottom nozzle 7 and the top nozzle 9. The spacer elements 11 hold the fuel rods 5 and ensures that the fuel rods 3 are separated from each other.

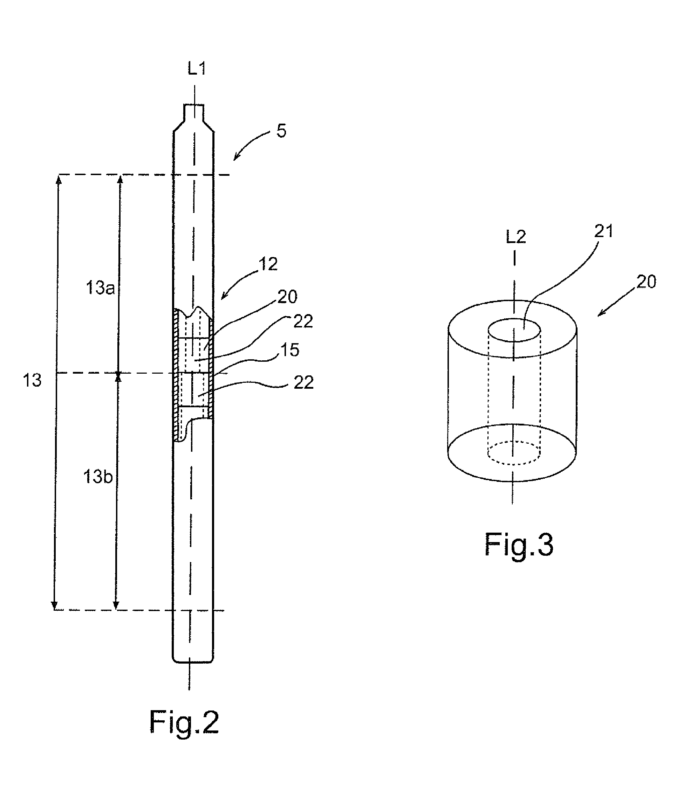

Fig. 2 shows a fuel rod 5 for a fuel assembly 1. The fuel rod 5 comprises a fuel stack 12 comprising cylindrical fuel pellets 20 enclosed within a cladding tube 15. The fuel pellets 20 of the fuel stack 12 are arranged along a longitudinal axis L1 of the fuel rod. At least a main portion 13 of the fuel stack comprises a fissile nuclear material comprising Plutonium and Thorium that is used for generating heat in the nuclear reactor. The remaining part of the fuel stack 12 comprises so-called blanket pellets that are used for positioning the main portion 13 of the fuel stack 12 in the cladding tube 15.

Fig. 3 shows details of one of the cylindrical fuel pellets 20 of the fuel rod 5 in fig. 2. The fuel pellet 20 comprises a fissile nuclear material comprising Plutonium and Thorium. The fuel pellet 20 is arranged with an axial hole 21 that extends along a longitudinal axis L2 of the pellet 20 from a bottom surface to a top surface of the fuel pellet 20. In said main portion 13 of the fuel stack 12, the fuel pellets 20 are arranged stacked on each other so that the main portion 13 of the fuel stack 12 is formed with an axial hole 22 extending along the longitudinal axis L1 of the fuel rod 5.

In the disclosed embodiment, the main portion 13 of the fuel stack 12 comprises a first fuel stack section 13a and a second fuel stack section 13b arranged on top of each other. The first fuel stack section 13a and the second fuel stack section 13b comprise fuel pellets 20 with different axial hole sizes 21. By arranging the main portion 13 of the fuel stack 12 in different sections 13a, 13b with different hole sizes, the moderation or fuel temperature of the fuel rod 5 can be adjusted along the length of the fuel rods 5.

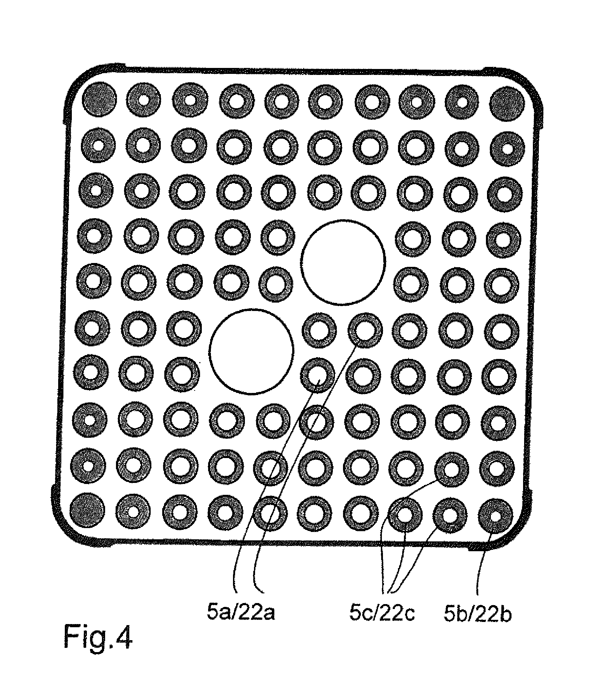

Fig. 4 shows a fuel rod lattice arrangement of a fuel assembly 1 according to a first embodiment of the invention. The bundle 3 of fuel rods 5 is arranged in a lattice. The bundle 3 of fuel rods 5 comprises a first group of a plurality of fuel rods 5a, a second group of a plurality of fuel rods 5b and a third group of a plurality of fuel rods 5c. The second group of fuel rods 5b is arranged peripheral to the first group of fuel rods 5a. The third group of fuel rods 5c is arranged between the first group of fuel rods 5a and the second group of fuel rods 5b.

The fuel assembly 1 is arranged so that said main portion 13 of the fuel stack 12 of each fuel rod 5a of the first group of fuel rods 5a is arranged with a first axial hole 22a constituting a first volume and said main portion 13 of the fuel stack 12 of each fuel rod 5b of the second group of fuel rods 5b is arranged with a second axial hole 22b constituting a second volume.

Said main portion of the fuel stack 13 of each fuel rod 5c of the third group of fuel rods 5c is arranged with a third axial hole 22c constituting a third volume. The size of the third axial hole 22c is configured so that the third volume is between the first and the second volume. Thereby, the third group of fuel rods 5c provides a transition in the axial hole volume between the first group of fuel rods 5a and the second group of fuel rods 5b. In the disclosed example, the transition is provided along a diagonal of the bundle 3 of fuel rods 5.

In fig. 4 the first volume is larger than the second volume. Thereby, the moderation ratio of the first group of fuel rods becomes more similar to the moderation ratio of the second group of fuel rods. Thereby the power profile at the beginning of life of the fuel assembly becomes more even, reducing the need for fissile content grading. In addition, the utilization of fissile Plutonium is improved, when used as the fissile component of Th-MOX fuel in a fuel assembly designed for UOX nuclear fuel. This eliminates the necessity to provide a modified nuclear fuel assembly design and to perform related thermal hydraulic experiments and/or adaptations.

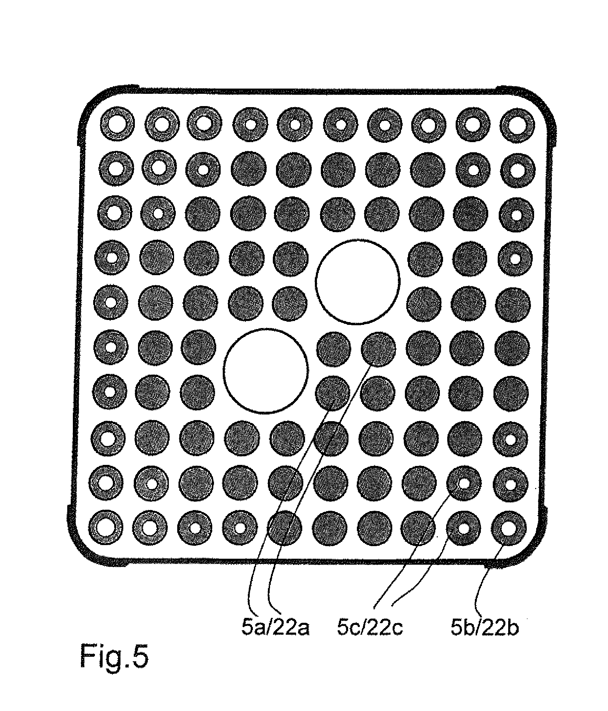

Fig. 5 shows a fuel rod lattice arrangement of a fuel assembly 1 according to a second embodiment of the invention. The bundle 3 of fuel rods 5 comprises a first group of fuel rods 5a and a second group of fuel rods 5b.

The fuel assembly 1 is arranged so that said main portion 13 of the fuel stack 12 of each fuel rod 5a of the first group of fuel rods 5a is arranged with a first axial hole 22a constituting a first volume and said main portion 13 of the fuel stack 12 of each fuel rod 5b of the second group of fuel rods 5b is arranged with a second axial hole 22b constituting a second volume. In fig. 5 said main portion 13 of the fuel stack 12 of each fuel rod 5a of the first group of fuel rods 5a lacks annular hole. Accordingly, the first axial hole 22a is zero and thus smaller than the axial hole 22b of said main portion 13 of the fuel stack 12 of each fuel rod 5b of the second group of fuel rods 5b.

Also in this embodiment, the fuel assembly comprises a third group of a plurality of fuel rods 5c, wherein the main portion of the fuel stack of each fuel rod 5c of the third group comprises a third axial hole 22c constituting a third volume that is intermediate to the first volume and the second volume. In this embodiment, the fuel rods of the first group are, on the average, more centrally located than the fuel rods of the second group, which are more peripherally located. The fuel rods of the third group are, on the average, located between the fuel rods of the first and second group.

By providing the main portion of the fuel rods of the different groups with holes with different volumes in this manner, the fuel temperature of the different groups of fuel rods becomes similar, reducing the need for fissile content grading. In this embodiment, the utilization of fissile Plutonium is improved when used as the fissile component of Th-MOX fuel in a fuel assembly designed for UOX nuclear fuel for a light water reactor. This eliminates the necessity to provide a modified nuclear fuel assembly design and to perform related thermal hydraulic experiments and/or adaptations.

The present invention is not limited to the embodiments disclosed but may be varied and modified within the scope of the following claims.

## Claims

1. A fuel assembly (1) for a nuclear reactor, the fuel assembly (1) comprising a bundle (3) of fuel rods (5, 5a, 5b, 5c) arranged so that the fuel rods (5, 5a, 5b, 5c) are spaced apart and extend parallel with each other, and which bundle (3) comprises a first group of fuel rods (5a) and a second group of fuel rods (5b), wherein each fuel rod (5, 5a, 5b, 5c) comprises a cladding tube (15) and a fuel stack (12) comprising fuel pellets (20) enclosed within the cladding tube (15), wherein at least a main portion (13) of the fuel stack (12) comprises a fissile nuclear material comprising Plutonium and Thorium, and wherein said main portion (13) of the fuel stack (12) of the fuel rods (5, 5a, 5b, 5c) comprises an axial hole (22, 22a, 22b, 22c) extending along a longitudinal axis (L1) of the fuel rod,
**characterized in that**
said main portion (13) of the fuel stack (12) of each fuel rod of said first group of fuel rods (5a) comprises a first axial hole (22a) in the fuel pellets (20) constituting a first volume and said main portion (13) of the fuel stack (12) of each fuel rod of said second group fuel rods (5b) comprises a second axial hole (22b) in the fuel pellets (20) constituting a second volume, wherein the first volume and the second volume are different.

2. The fuel assembly (1) according to claim 1, wherein the first volume is larger than the second volume.

3. The fuel assembly (1) according to claim 2, wherein the first volume is in the range of 1 - 90 % of the volume of a corresponding fuel stack (13) with pellets (20) without the axial hole (22).

4. The fuel assembly (1) according to claim 2 or 3, wherein the second volume is in the range of 0 - 50 % of the volume of a corresponding fuel stack (13) with pellets (20) without the axial hole (22).

5. The fuel assembly (1) according to claim 1, wherein the first volume is smaller than the second volume.

6. The fuel assembly (1) according to claim 5, wherein the first volume is in the range of 0 - 50 % of the volume of a corresponding fuel stack (13) with pellets (20) without the axial hole (22).

7. The fuel assembly (1) according to claim 5 or 6, wherein the second volume is in the range of 1 - 90 % of the volume of a corresponding fuel stack (13) with pellets (20) without the axial hole (22).

8. The fuel assembly (1) according to any of the preceding claims, wherein the fissile nuclear material comprises a mix of oxides from Uranium and Plutonium.

9. The fuel assembly (1) according to any of the preceding claims, wherein said main portion of the fuel stack (13) comprises additives of at least one of Americium, Curium, Neptunium and Protactinium.

10. The fuel assembly (1) according to any of the preceding claims, wherein the fuel rods (5, 5a, 5b, 5c) are arranged such that the design of the fuel assembly is the same as the design of a fuel assembly designed for use in a conventional light water reactor with conventional uranium oxide fuel.

11. The fuel assembly (1) according to any of the preceding claims, wherein the fuel assembly (1) comprises a third group of a plurality of fuel rods (5c), wherein said main portion (13) of the fuel stack (12) of each fuel rod (5c) of said third group of fuel rods (5c) comprises a third axial hole (22c) in the fuel pellets (20) constituting a third volume that is intermediate to the first volume and the second volume.

12. The fuel assembly (1) according to any of preceding claims, wherein said main portion of the fuel stack (13) of at least some of the fuel rods (5, 5a, 5b, 5c) comprises two or more fuel stack sections (13a, 13b) with fuel pellets (20) comprising different axial hole sizes.

13. The fuel assembly (1) according to any of the preceding claims, wherein the axial holes (22) are filled with pressurized helium gas.

14. The fuel assembly (1) according to any of the preceding claims, where the axial holes (22) are circular holes extending along a longitudinal axis (L2) of the fuel pellets.

15. Use of fuel assembly (1) according to any of claims 1-14 in a nuclear reactor during the operation of the nuclear reactor.
